# EUROPEAN PATENT APPLICATION

(11) **EP 3 006 781 A1**
(43) Date of publication of application: **13.04.2016**
(21) Application number: 14803607.2
(22) Date of filing: 27.05.2014
(51) Int. Cl.: F16H 61/04, F16H 61/28, F16H 63/32

(54) **DOG CLUTCH CONTROL DEVICE FOR AUTOMATIC TRANSMISSION**

(30) Priority: 31.05.2013 JP 2013115949
(71) Applicant: Aisin Seiki Kabushiki Kaisha, Kariya-shi, Aichi 448-8650 (JP)
(72) Inventor: MORI Kyosuke, Kariya-shi Aichi 448-8650 (JP); IWASAKI Yasuhisa, Kariya-shi Aichi 448-8650 (JP); YOSHIDA Yusuke, Kariya-shi Aichi 448-8650 (JP); KOMURA Masahiko, Kariya-shi Aichi 448-8650 (JP); IWATATakashi, Kariya-shi Aichi 448-8650 (JP)
(74) Representative: Kramer Barske Schmidtchen Patentanwälte PartG mbB
(86) International application number: PCT/JP2014/064025
(87) International publication number: WO 2014/192772

(57) **Abstract**

To provide a dog clutch control apparatus for an automated transmission that enables a prompt shifting operation in a case where a sleeve is moved to engage with a dog clutch at a time of shifting. A control apparatus 10 includes a calculation portion 10b that calculates a moving speed of the sleeve 36 based on a detection position by a stroke position sensor 38 at a predetermined time, the stroke position sensor detecting a moving position of the sleeve, and controls an operation of an axial driving device 40 based on the detection position by the stroke position sensor and the moving speed of the sleeve. The control apparatus applies a stop thrust load F4 to high teeth 36a1 for stopping a forward movement of the high teeth before the high teeth make contact with end surfaces 30b6 of clutch rear teeth 30b2 of a clutch ring 30, after each of the high teeth passes through a chamfered portion 30b3 of each of clutch front teeth of the clutch ring.

## Description

### TECHNICAL FIELD

The present invention relates to a dog clutch control apparatus used in an automated transmission for a vehicle.

### BACKGROUND ART

Conventionally, a powertrain of a vehicle includes a transmission which changes torque and/or the number of rotations of a driving apparatus including, for example, an engine and/or an electric motor, which is used for driving, so that the torque and/or rotations are transmitted to a driving wheel according to running conditions of the vehicle. There are some types of transmissions including, for example, a normally-meshed type transmission. For example, a known normally-meshed type transmission includes plural idler gears each of which is fitted to a rotary shaft connected to the driving wheel so that the plural idler gears are rotatable relative to the rotary shaft and are not movable in a direction of a rotational axis, and plural gears which are provided around a periphery of a counter shaft arranged to be parallel to the rotary shaft. The idler gears and the gears normally mesh with each other. According to the known normally-engaged type transmission, a sleeve which is arranged side by side with the idler gear is spline-fitted to the rotary shaft to be movable in the direction of the rotational axis. Engaging teeth (spline) which are provided at a joining surface of the sleeve which is joined to the idler gear are brought to engage with engaged teeth (dog clutch teeth) which are provided at a joined surface of the idler gear. Thus, the idler gear engaged with the sleeve and the rotary shaft rotate integrally with each other. As the idler gear which rotates integrally with the rotary shaft and the gear of the counter shaft which meshes with the idler gear rotate in association with each other, torque and/or the number of rotations of the rotary shaft is transmitted to the counter shaft. A shifting operation is performed by selecting, from among the plural idler gears which include different numbers of teeth from each other, the idler gear that is to be rotated integrally with the rotary shaft and by bringing the sleeve into engagement with the selected idler gear. Depending on a timing at which the sleeve is pressed against the idler gear, there may be a case where the sleeve and the idler gear fail to engage with each other properly.

In such an instance, in order to properly engage the sleeve and the idler gear with each other, according to Patent document 1, torque with which the sleeve is pushed against the idler gear-side is once reduced, and thereafter the sleeve is pushed against the idler-gear side again with a large torque.

According to Patent document 1, in a case where the sleeve fails to engage with the idler gear, only an engagement operation is performed again. Therefore, without starting a shifting operation from the beginning, the sleeve and the idler gear may be brought into engagement with each other.

### DOCUMENT OF PRIOR ART

### PATENT DOCUMENT

Patent Document 1: JPH11-82710A

### OVERVIEW OF INVENTION

### PROBLEM TO BE SOLVED BY INVENTION

According to the shift control method described in Patent Document 1, however, a timer is used to determine that the sleeve is unable to be brought into engagement with a dog clutch of the idler gear. In a case where the sleeve does not reach a predetermined engagement position even though a predetermined time has passed, a reentry control under which the sleeve is brought into engagement with the idler gear again is executed. Thus, an entry control end time before the reentry, which is set by the timer, needs to be specified at a value that is equal to or longer than a period of time for the sleeve to move to the predetermined position properly (that is, the period of time for the sleeve to engage with the dog clutch without being bounced back by the dog clutch). Accordingly, at a time point at which it is determined that the sleeve is unable to be brought into engagement with the dog clutch of the idler gear, the dog clutch is already pushed against the sleeve, and thus a difference in the number of rotations between the sleeve and the idler gear is already slight. Therefore, it takes time until the sleeve and the idler gear come to the next position at which the sleeve and the idler gear are engageable with each other. Alternatively, it takes longer time until the sleeve and the idler gear engage with each other next because the sleeve and the idler gear co-rotate with each other. As a result, a time for the shifting operation may be long.

Therefore, the inventors have proposed, in Patent Application 2013-017265, a control for moving a sleeve forward by a thrust load that may secure a relative rotation against a friction force generated by a contact between end surfaces of a sleeve tooth and a dog rear tooth in a rotation adjustment range where the sleeve tooth (spline) advances from a front end portion of a dog front tooth (clutch front tooth) to a front end portion of the dog rear tooth (clutch rear tooth), the thrust load by which the sleeve tooth is inhibited from moving rearward from the rotation adjustment range in a case where the sleeve tooth is bounced back by the front end portion of the dog rear tooth.

In a case where the sleeve tooth is bounced back by the front end portion of the dog rear tooth, however, the number of rotations of the sleeve decreases so that a difference in rotations is reduced. Thus, a period of time for the sleeve tooth to make contact with a side surface of the dog front tooth for achieving a rotational synchronization extends. As a result, a time for the shifting operation may be elongated.

The present invention is made in view of the drawback mentioned above and an object of the invention is to provide a dog clutch control apparatus for an automated transmission that achieves a prompt shifting operation in a case where a sleeve is shifted to engage with a dog clutch at a time of shifting.

### MEANS FOR SOLVING PROBLEM

In order to solve the aforementioned drawback, a structural feature of the invention according to claim 1 is including a rotary shaft rotatably connected to one of an input shaft and an output shaft of an automated transmission and supported to be rotatable around an axis of the automated transmission, a dog clutch transmission mechanism including a clutch ring rotatably supported at the rotary shaft and rotatably connected to the other of the input shaft and the output shaft, a clutch hub fixed to the rotary shaft and arranged adjacent to the clutch ring, a sleeve fitted to the clutch hub at a spline, the sleeve being inhibited from rotating relative to the clutch hub and movable in a direction of the axis, an axial driving device moving the sleeve in an axial direction by a shift fork, a dog clutch portion provided at a mating portion of the clutch ring, the mating portion protruding towards the sleeve, the dog clutch portion selectively meshing with the spline based on an axial movement of the sleeve, and a stroke position sensor detecting a moving position of the sleeve in the axial direction, the spline including a plurality of high teeth each of which includes a greater tooth depth than a tooth depth of the rest of the spline corresponding to a low tooth, the dog clutch portion including clutch front teeth which include an outer diameter greater than an inner diameter of the high teeth and smaller than an inner diameter of the low tooth, the clutch front teeth being arranged at positions corresponding to positions of the high teeth and extending from a front end surface of the dog clutch portion to a rear end position of the dog clutch portion, the dog clutch portion including clutch rear teeth configured to mesh with tooth grooves of the spline, each of the clutch rear teeth extending from a position retracted from the front end surface of the dog clutch portion by a predetermined amount to the rear end position of the dog clutch portion, a control apparatus including a calculation portion calculating a moving speed of the sleeve based on a detection position by the stroke position sensor at a predetermined time and controlling an operation of the axial driving device based on the detection position by the stroke position sensor and the moving speed of the sleeve, the control apparatus applying a stop thrust load to the high teeth for stopping a forward movement of the high teeth before the high teeth make contact with end surfaces of the clutch rear teeth after each of the high teeth passes through a chamfered position of each of the clutch front teeth, the chamfered position at which a chamfered portion inclined relative to a rotation direction of the clutch front teeth is provided.

A structural feature of the invention according to claim 2 is the dog clutch control apparatus for the automated transmission described in claim 1, wherein the axial driving device further includes a shift detent mechanism including a fork shaft including an outer peripheral surface at which a stop position recess portion is formed in a recess shape by inclined surfaces facing each other and arranged adjacent to each other, the stop position recess portion positioning each of the high teeth before a position at which each of the high teeth makes contact with a front end surface of each of the clutch rear teeth, the fork shaft being supported at the housing to be slidable in the axial direction, the fork shaft to which the shift fork is fixed and a lock member provided at the housing and biased by a biasing member in a direction orthogonal to the fork shaft, the lock member being fitted in the position recess portion.

A structural feature of the invention according to claim 3 is the dog clutch control apparatus for the automated transmission described in claim 2, wherein the fork shaft of the shift detent mechanism includes a neutral position recess portion arranged adjacent to the stop position recess portion at one side in the axial direction at the outer peripheral surface of the fork shaft, the neutral position recess portion in which the lock member is fitted at a neutral position at which the sleeve is inhibited from meshing with the dog clutch portion of the clutch ring, the neutral position recess portion positioning the sleeve and a meshing position recess portion arranged adjacent to the stop position recess portion at the other side in the axial direction at the outer peripheral surface of the fork shaft, the meshing position recess portion in which the lock member is fitted at a mating position at which the sleeve is meshed with the mating portion, the meshing position recess portion positioning the sleeve.

A structural feature of the invention according to claim 4 is the dog clutch control apparatus for the automated transmission described in either claim 2 or 3, wherein the control apparatus stops the application of the stop thrust load at a time when the lock member reaches an edge of one of the inclined surfaces of the stop position recess portion.

A structural feature of the invention according to claim 5 is the dog clutch control apparatus for the automated transmission described in any one of claims 1 through 4, wherein the control apparatus applies a relative rotation securing thrust load to the high teeth for securing a relative rotation between the high teeth and the clutch rear teeth against a friction force generated by a contact between end surfaces of the high teeth and the clutch rear teeth at a predetermined timing at which the high teeth reach the clutch rear teeth after the stop thrust load is applied.

A structural feature of the invention according to claim 6 is the dog clutch control apparatus for the automated transmission described in claim 5, wherein the stop thrust load is a negative thrust load for braking the sleeve until immediately before the sleeve is stopped, the control apparatus applying a fit-in allowable thrust load to the high teeth for causing each of the high teeth to fit in between the clutch front tooth and the clutch rear tooth against a friction force generated between the high and low teeth and the clutch front and rear teeth after the application of the relative rotation securing thrust load, the fit-in allowable thrust load corresponding to a thrust load greater than the relative rotation securing thrust load.

A structural feature of the invention according to claim 7 is the dog clutch control apparatus for the automated transmission described in claim 2, wherein the control apparatus applies a predetermined thrust load to the high teeth until each of the high teeth moves from a neutral position at which the high teeth are inhibited from meshing with the dog clutch portion to the chamfered position of each of the clutch front teeth during a time period during which the high tooth bounced back by the clutch front tooth rotates relative to the clutch front tooth and reaches the next clutch front tooth, the predetermined thrust load generating a speed at which the high tooth is configured to enter between the clutch front tooth by which the high tooth is bounced back and the next clutch front tooth, the control apparatus applies the stop thrust load to the high teeth for stopping the forward movement of the high teeth until the lock member reaches an edge of one of the inclined surface of the stop position recess portion after the application of the predetermined thrust load, the control apparatus applies a relative rotation securing thrust load to the high teeth for securing a relative rotation between the high teeth and the clutch rear teeth against a friction force generated by a contact between end surfaces of the high teeth and the clutch rear teeth in a case where the moving speed of the sleeve becomes equal to or smaller than a predetermined speed at which each of the high teeth is inhibited from being bounced back by the front end surface of each of the clutch rear teeth, the control apparatus applies a fit-in allowable thrust load to the high teeth for causing each of the high teeth to fit in between the clutch front tooth and the clutch rear tooth against a friction force generated between the high and low teeth and the clutch front and rear teeth after the high tooth passes through a chamfered position of the clutch rear tooth, the chamfered position at which a chamfered portion inclined relative to a rotation direction of the clutch rear teeth is provided.

### EFFECTS OF THE INVENTION

According to the invention of claim 1, the control apparatus stops the high teeth, which are moving forward, before the high teeth make contact with the front end surfaces of the clutch rear teeth. Thus, the high teeth are inhibited from being bounced back by the front end surfaces of the clutch rear teeth. A loss of the number of rotations of the sleeve upon bounce-back of the high teeth by the clutch rear teeth does not occur. As a result, the number of relative rotations (difference in rotations) between the sleeve and the third clutch ring is inhibited from decreasing and the high number of relative rotations is maintained so that the high teeth make immediate contact with lateral surfaces of the clutch front teeth. Then, each of the high teeth is able to fit in between the clutch rear tooth and the clutch front tooth while being guided by the lateral surface of the clutch front tooth. As a result, a prompt shifting operation may be performed.

According to the invention of claim 2, a thrust force applied to the inclined surface by a biasing force of the lock member causes the fork shaft to move in the axial direction so that the high teeth of the sleeve may be securely positioned before a position at which the high teeth make contact with the end surfaces of the clutch rear teeth. Accordingly, the high teeth are inhibited from being bounced back by the clutch rear teeth to inhibit a decrease of difference in rotations between the sleeve and the third clutch ring. A period of time during which the high teeth that reach the clutch rear teeth move to the lateral surfaces of the clutch front teeth may be reduced, which enables the prompt shifting operation.

According to the invention of claim 3, the neutral position recess portion is arranged adjacent to the stop position recess portion at one side thereof and the meshing position recess portion is arranged adjacent to the stop position recess portion at the other side thereof. Thus, the high teeth are inhibited from being bounced back by the clutch rear teeth because of the stop position recess portion, for example, and additionally, positioning at the stop position neutral position and positioning at the meshing position may be securely performed.

According to the invention of claim 4, the thrust load by the axial driving device is stopped at the time the lock member reaches the edge of the inclined surface so as to move forward the high teeth of the sleeve only by a small thrust force applied to the inclined surface by the lock member. The speed of the high teeth of the sleeve moving to the clutch rear teeth is slight. Because of the slight speed of the high teeth of the sleeve, the sleeve is inhibited from being bounced back or an amount of bouncing is reduced even if the sleeve is bounced back, thereby reducing the decrease of difference in rotations.

According to the invention of claim 5, the high teeth that reach the clutch rear teeth at the predetermined timing after the application of the stop thrust load is applied with the thrust load that may secure the relative rotation so that the high teeth promptly move to the lateral surfaces of the clutch front teeth without the co-rotation of the high teeth and the clutch rear teeth. The sleeve and the clutch ring may promptly mesh with each other accordingly.

According to the invention of claim 6, because of the stop thrust load serving as the negative thrust load, the thrust force in the forward direction of the high teeth is effectively reduced. Then, because of the relative rotation securing thrust load serving as a small thrust force applied in a state where the aforementioned thrust force is reduced, each of the high teeth is able to promptly start fitting in between the clutch front tooth and the clutch rear tooth. Each of the high teeth may promptly fit in between the clutch front tooth and the clutch rear tooth with the large fit-in allowable thrust load.

According to the invention of claim 7, each of the high teeth enters between the clutch front teeth by the predetermined thrust load. Then, because of the stop thrust load, the thrust force in the forward direction of the high teeth is effectively reduced before the high teeth make contact with the front end surfaces of the clutch rear teeth so that the moving speed of the sleeve decreases to a level so that the high teeth are inhibited from being bounced back by the front end surfaces of the clutch rear teeth. Each of the high teeth is able to promptly start fitting in between the clutch front tooth and the clutch rear tooth by the relative rotation securing thrust load. Each of the high teeth which starts the fitting-in may promptly fit in between the clutch front tooth and the clutch rear tooth.

### BRIEF DESCRIPTION OF DRAWINGS

[Fig. 1] A schematic view of a vehicle mounted with an automated transmission including a dog clutch according to the present invention;
[Fig. 2] A schematic view of the automated transmission including the dog clutch according to the present invention;
[Fig. 3] A block diagram of a control apparatus;
[Fig. 4] An exploded perspective view of a dog clutch transmission mechanism;
[Fig. 5] A front view of a clutch ring;
[Fig. 6] A front view of a clutch hub;
[Fig. 7] A front view of a sleeve;
[Fig. 8] A flowchart illustrating a thrust load control of an axial driving device according to a first embodiment;
[Fig. 9] A diagram illustrating a relation between a sleeve position (stroke) relative to a dog clutch portion and a thrust load over the passage of time for shifting;
[Fig. 10] An enlarged cross-sectional view schematically illustrating a shift detent mechanism according to a second embodiment;
[Fig. 11] A diagram illustrating a relation between a sleeve position (stroke) relative to a dog clutch portion and a thrust load over the passage of time for shifting;
[Fig. 12] A diagram illustrating a relation between the sleeve position (stroke) relative to the dog clutch portion and the thrust load over the passage of time for shifting;
[Fig. 13] A diagram illustrating a positional relation between a lock member and a positioning recess portion in a case where the sleeve is positioned at a position S5;
[Fig. 14] A diagram illustrating a positional relation between the lock member and the positioning recess portion in a case where the sleeve is positioned between the position S5 and a position S4; and
[Fig. 15] A diagram illustrating the sleeve positioned in front of the position S4 in a case where the lock member is fitted in a stop position recess portion.

### MODE FOR CARRYING OUT THE INVENTION

### (First embodiment 1)

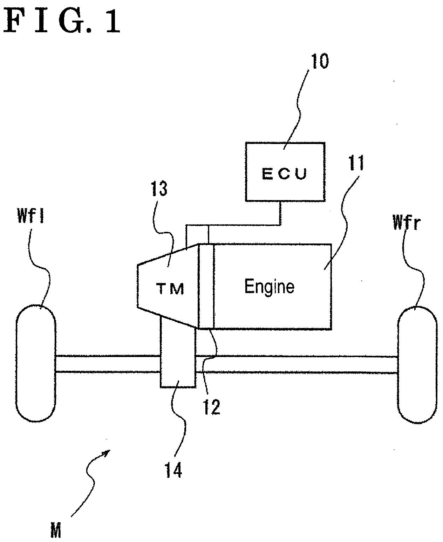

Hereinafter, a first embodiment where an automated transmission including a dog clutch control apparatus for an automated transmission according to the present invention is employed to a vehicle is explained with reference to drawings. Fig. 1 is a schematic view illustrating a construction of the vehicle.

As illustrated in Fig. 1, a vehicle M is configured to include an engine 11, a clutch 12, an automated transmission 13, a differential apparatus 14 and driving wheels (left and right front wheels) Wfl, Wfr. The engine 11 generates drive power by combusting fuel. The drive power of the engine 11 is configured to be transmitted to the driving wheels Wfl, Wfr via the clutch 12, the automated transmission 13 and the differential apparatus 14 (the vehicle M is a so-called front wheel drive vehicle).

The clutch 12 is configured to be connected and disconnected automatically according to a command of a control apparatus (ECU) 10. The automated transmission 13 includes therein a dog clutch transmission mechanism, and automatically selects, for example, six forward gears and one backward gear. The differential apparatus 14, which is configured to include a final gear and a differential gear, is formed integrally with the automated transmission 13.

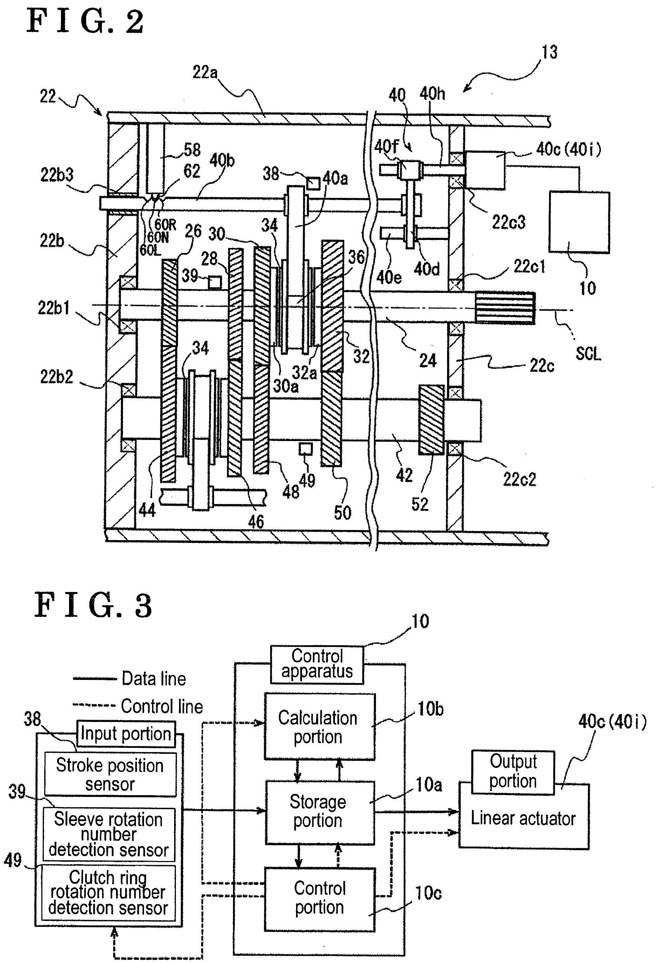

As illustrated in Fig. 2, the automated transmission 13 includes a housing 22, an input shaft (rotary shaft) 24, a first input gear 26, a second input gear 28, a third clutch ring (third input gear) 30, a fourth clutch ring (fourth input gear) 32, a clutch hub (hub) 34, a sleeve 36, a stroke position sensor 38, an axial driving device 40, an output shaft 42, a first clutch ring (first output gear) 44, a second clutch ring (second output gear) 46, a third output gear 48 and a fourth output gear 50. The first clutch ring (first output gear) 44, the second clutch ring (second output gear) 46, the clutch hub (hub) 34, the sleeve 36, an axial driving device (not illustrated) and the like constitute a first dog clutch transmission mechanism. The third clutch ring (third input gear) 30, the fourth clutch ring (fourth input gear) 32, the clutch hub (hub) 34, the sleeve 36, the stroke position sensor 38, the axial driving device 40 and the like constitute a second dog clutch transmission mechanism. The aforementioned first and second dog clutch transmission mechanisms, the control apparatus 10 and the like constitute the dog clutch control apparatus for the automated transmission.

The housing 22 includes a main body 22a formed in a substantially closed-end cylindrical configuration, a first wall 22b serving as a bottom wall of the main body 22a and a second wall 22c dividing inside of the main body 22a in right and left direction.

The input shaft 24 is rotatably supported at the housing 22. That is, one end (left end) of the input shaft 24 is supported at the first wall 22b via a bearing 22b1 and the other end side (right end) of the input shaft 24 is supported at the second wall 22c via a bearing 22c1. The other end of the input shaft 24 is rotatably connected to an output shaft of the engine 11 via the clutch 12. Thus, output of the engine 11 is inputted to the input shaft 24 in a case where the clutch 12 is connected. The input shaft 24 serves as the rotary shaft of the present invention. The input shaft (rotary shaft) 24 of this embodiment is rotatably connected directly to the input shaft of the automated transmission 13 and is supported to be rotatable about an axis SCL.

The first input gear 26, the second input gear 28, the third clutch ring (third input gear) 30 and the fourth clutch ring (fourth input gear) 32 are provided at the input shaft 24. The first and second input gears 26 and 28 are fixed to the input shaft 24 by, for example, spline-fitting, so as not to be rotatable relative to the input shaft 24. The third input gear is formed at an outer periphery of the third clutch ring 30 which is supported at the input shaft 24 to be rotatable relative to the input shaft 24. The fourth input gear is formed at an outer periphery of the fourth clutch ring 32 which is supported at the input shaft 24 to be rotatable relative to the input shaft 24. Further, the clutch hub (hub) 34 is fixed to the input shaft 24 by, for example, spline-fitting so as not to be rotatable relative to the input shaft 24 in a manner that the clutch hub 34 is disposed between the third clutch ring 30 and the fourth clutch ring 32 to be adjacent to the third clutch ring 30 and the fourth clutch ring 32. The third input gear (third clutch ring) 30 meshes with the third output gear which is described below and the fourth input gear (fourth clutch ring) 32 meshes with the fourth output gear which is described below.

A rotation number detection sensor 39 is provided in the vicinity of the input shaft 24. The rotation number detection sensor 39 detects the number of rotations of the sleeve 36 based on the number of rotations of the input shaft 24.

The output shaft 42 is provided at the housing 22 to be arranged parallel to the input shaft 24. The output shaft 42 is rotatably supported at the housing 22. That is, one end (left end) of the output shaft 42 is supported at the first wall 22b via a bearing 22b2 and the other end (right end) of the output shaft 42 is supported at the second wall 22c via a bearing 22c2.

The first clutch ring (first output gear) 44, the second clutch ring (second output gear) 46, the third output gear 48, the fourth output gear 50 and a fifth output gear 52 are provided at the output shaft 42. The first clutch ring (first output gear) 44 meshes with the first input gear 26. A helical gear meshing with the first input gear 26 is formed at an outer circumferential surface of the first clutch ring 44. The second clutch ring (second output gear) 46 meshes with the second input gear 28. A helical gear meshing with the second input gear 28 is formed at an outer circumferential surface of the second clutch ring 46. The third output gear 48 meshes with the third clutch ring (third input gear) 30. A helical gear meshing with the third clutch ring (third input gear) 30 is formed at an outer circumferential surface of the third output gear 48. The fourth output gear 50 meshes with the fourth clutch ring (fourth input gear) 32. A helical gear meshing with the fourth clutch ring (fourth input gear) 32 is formed at an outer circumferential surface of the fourth output gear 50. The fifth output gear meshes with an input gear (not illustrated) of the differential apparatus 14. A helical gear meshing with the input gear is formed at an outer circumferential surface of the fifth output gear.

A rotation number detection sensor 49 constituted by a rotary encoder, for example, is provided in the vicinity of the output shaft 42. The rotation number detection sensor 49 detects the number of rotations of the output shaft 42 to thereby detect the number of rotations of the third clutch ring 30, for example, at the input shaft 24.

The clutch hub (hub) 34 is fixed to the output shaft 42 by, for example, spline-fitting. The clutch hub 34 is disposed between the first clutch ring 44 and the second clutch ring 46 to be arranged adjacent to the first clutch ring 44 and the second clutch ring 46. The configurations of the first clutch ring 44, the second clutch ring 46, the clutch hub 34 and the like are identical to those of the third clutch ring 30, the fourth clutch ring 32 and the clutch hub 34 at the input shaft 24, therefore the explanation is omitted. The third output gear 48, the fourth output gear 50 and the fifth output gear 52 are fixed to the output shaft 42 by, for example, spline-fitting. The drive power of the engine 11 is inputted from the input shaft 24, transmitted to the output shaft 42, and finally outputted to the differential apparatus 14 via the fifth output gear 52.

A configuration of the second dog clutch transmission mechanism at the input shaft 24 is similar to that of the first dog clutch transmission mechanism at the output shaft 42, and therefore an explanation is made on the second dog clutch transmission mechanism at the input shaft 24.

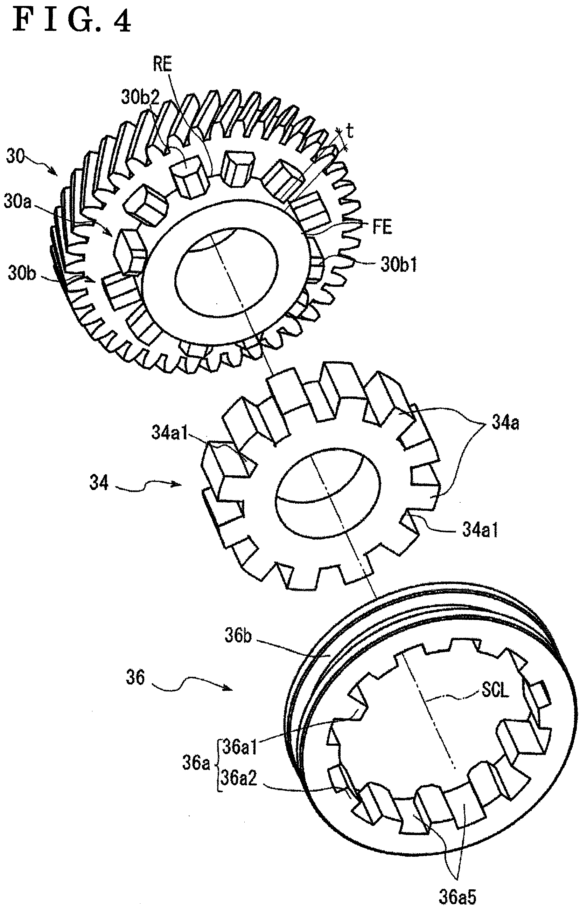

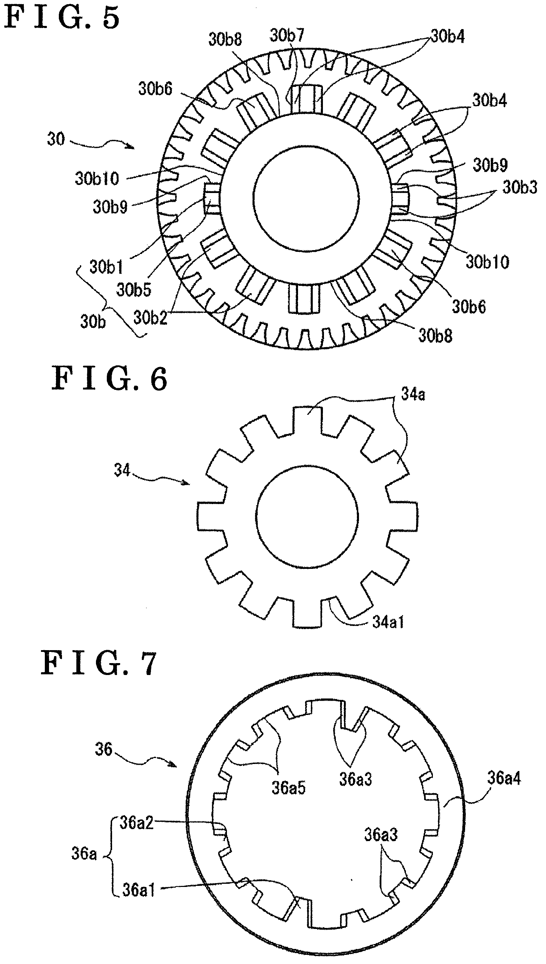

The clutch hub 34 is supported at the input shaft 24 by spline-fitting (not illustrated) so as to be rotatable integrally with the input shaft 24. As illustrated in Figs. 4 and 6, the clutch hub 34 includes an engagement hole to which the input shaft 24 is fitted. The clutch hub 34 is formed in a flat tubular shape. Spline teeth 34a are provided at an outer circumferential surface of the clutch hub 34. Twelve of the spline teeth 34a are arranged in a circumferential direction of the clutch hub 34 at a constant pitch. The spline teeth 34a are formed to include the identical diameter of an addendum circle. The spline teeth 34a is formed to include the identical diameter of a dedendum circle to obtain meshing grooves 34a1 each of which includes a depth so that each of high teeth 36a1 and low teeth 36a2 of the sleeve 36 is configured to mesh with the meshing groove 34a1. Inner teeth (spline) 36a of the sleeve 36 engage with the spline teeth 34a of the clutch hub 34 so as to be slidable.

The sleeve 36 is formed in a substantially annular configuration. An outer circumferential groove 36b which slidably engages with a shift fork 40a of the axial driving device 40 (refer to Fig. 2) is provided at an outer periphery of the sleeve 36 in a circumferential direction of the sleeve 36. As illustrated in Figs. 4 and 7, a total of twelve inner teeth 36a provided at an inner periphery of the sleeve 36 are arranged in the circumferential direction at a constant pitch. The inner teeth 36a are formed to include the identical diameter of a dedendum circle. The inner teeth 36a include the high teeth 36a1 and the low teeth 36a2, a tooth depth of each of the high teeth 36a1 and a tooth depth of each of the low teeth 36a2 being different from each other. The high teeth 36a1, each of which includes a large tooth depth, are formed as a pair on the circumference so as to face each other at a 180 degree interval therebetween. The other inner teeth 36a, that is, the ten low teeth 36a2, include the identical tooth depth which is smaller than the depth of each of the high teeth 36a1. The sleeve 36 includes end surfaces (front end surfaces 36a4) which face the third and fourth clutch rings 30 and 32, respectively. Each of the end surfaces (front end surfaces 36a4), i.e., the surface of each of the high teeth 36a1 and the low teeth 36a2 at a right angle relative to the axis SCL includes corners located at front and rear in a rotation direction form chamfered surfaces 36a3, 36a3 at 45 degrees angle relative to the rotation direction (refer to Fig. 7). Accordingly, the corner portions are inhibited from being chipped off due to an impact with dog clutch teeth, which is described below, of the third and fourth clutch rings 30 and 32. A tooth groove 36a5 is formed between each of the high teeth 36a1 and the low tooth 36a2 that is adjacent to the high tooth 36a1, and between the low teeth 36a2 that are adjacent to each other. Clutch front teeth 30b1 and clutch rear teeth 30b2, which are described below, of the third clutch ring 30 fit to the tooth grooves 36a5. The high teeth 36a1 and the low teeth 36a2 of the sleeve 36 engage with the meshing grooves 34a1 of the clutch hub 34.

At the input shaft 24, the third clutch ring 30 and the fourth clutch ring 32 are provided at opposed sides of the clutch hub 34 to be adjacent to the clutch hub 34. Dog clutch portions of the third clutch ring 30 and the fourth clutch ring 32 include substantially symmetric configurations to each other relative to the clutch hub 34 disposed between the third clutch ring 30 and the fourth clutch ring 32, therefore the explanation is simply made on the third clutch ring 30.

As illustrated in Figs. 4 and 5, the third clutch ring 30 is provided at the input shaft 24 via a bearing (not illustrated) so as to be rotatable relative to the input shaft 24 and so as not to be movable relative to the input shaft 24 in a direction of the axis SCL (refer to Fig. 2). The third input gear provided at an outer circumferential surface of the third clutch ring 30 forms an idler gear which is rotatable relative to the input shaft 24. A third dog clutch portion 30a in a ring shape is provided at a facing surface (mating portion) of the third clutch ring 30 facing the clutch hub 34. Plural dog clutch teeth 30b which mesh with the inner teeth 36a of the sleeve 36 are provided at an outer periphery of the third dog clutch portion 30a. The dog clutch teeth 30b include two kinds of clutch teeth having different tooth depths from each other, that is, the clutch front teeth 30b1 and the clutch rear teeth 30b2. In addition, the dog clutch teeth 30b are arranged in a circumferential direction of the third clutch ring 30 at a constant pitch. The dog clutch teeth 30b are formed to include the identical diameter of a dedendum circle. A pair of (i.e., two of) the clutch front teeth 30b1 are provided at positions facing each other, i.e., one of the positions is rotated from the other of the positions by 180 degrees in the circumferential direction. The clutch front teeth 30b1 are formed in such a manner that an outer diameter of an addendum circle of the clutch front teeth 30b1 is larger than an inner diameter of an addendum circle of the high teeth 36a1 of the sleeve and is smaller than an inner diameter of an addendum circle of the low teeth 36a2. Each of the clutch front teeth 30b1 is formed to extend in the direction of the axis SCL from a front end surface FE of the third dog clutch portion 30a which constitutes the mating portion to a rear end position RE of the third dog clutch portion 30a. Each of the clutch front teeth 30b1 includes lateral surfaces 30b9 positioned at a side towards the sleeve 36. Each of the lateral surfaces 30b9 is provided with a chamfered portion 30b3 inclined by 45 degrees angle relative to a rotation direction of the third clutch ring 30. In a case where the sleeve 36 comes closer to the third clutch ring 30 while rotating relative to the third clutch ring 30, the clutch front teeth 30b1 are configured to engage with the high teeth 36a1 of the sleeve 36 without engaging with the low teeth 36a2. A front end surface 30b5, which faces towards the sleeve 36, of the clutch front tooth and the chamfered portions 30b3 constitute a front end portion of each of the clutch front teeth 30b 1.

As illustrated in Figs. 4 and 5, five of the clutch rear teeth 30b2 are arranged at a phase position between the two clutch front teeth 30b1 and another five of the clutch rear teeth 30b2 are arranged at another phase position between the two clutch front teeth 30b1, that is, ten of the clutch rear teeth 30b2 are provided in total. The clutch rear teeth 30b2 are formed in such a manner that an outer diameter of an addendum circle of the clutch rear teeth 30b2 is larger than the inner diameter of the addendum circle of the low teeth 36a2 of the sleeve 36. Each of the clutch rear teeth 30b2 is formed to extend from a position retracted from the front end surface FE of the third dog clutch portion 30a constituting the mating portion, that is, retracted from the side of the sleeve 36, by a predetermined amount t in the direction of the axis SCL, to the rear end position RE of the third dog clutch portion 30a. Each of the clutch rear teeth 30b2 includes lateral surfaces 30b7 positioned at a side towards the sleeve 36. Each of the lateral surfaces 30b7 is provided with a chamfered portion 30b4 inclined by 45 degrees angle relative to the rotation direction. In a case where the sleeve 36 comes closer to the third clutch ring 30 while rotating relative to the third clutch ring 30, as the high teeth 36a1 and the low teeth 36a2 move into the position at the third clutch ring 30, the position which is retracted by the predetermined amount t, the clutch rear teeth 30b2 are configured to engage with the high teeth 36a1 and the low teeth 36a2 of the sleeve 36. As the clutch rear teeth 30b2 engage with the high teeth 36a1 and the low teeth 36a2 of the sleeve, a large rotational torque is transmitted safely and reliably.

Various position sensors such as a position sensitive detector and a linear encoder, for example, may be employed as the stroke position sensor 38. The stroke position sensor 38 detects a relative position between the sleeve 36 and the third clutch ring 30 and detects each stop position of a shift detent mechanism 58.

As illustrated in Fig. 3, the control apparatus 10 includes a storage portion 10a, a calculation portion 10b and a control portion 10c. The control apparatus 10 controls thrust load values F1, F2, F3 and F4 of a linear actuator 40i which drives the axial driving device 40 and a moving position of the front end surfaces 36a4 of the high teeth 36a1 on the basis of relative position signals. The relative position signals indicate relative positions of a distal end (the front end surfaces 36a4 of the high teeth 36a1) of the sleeve 36 which is detected by the stroke position sensor 38 relative to the front end surface FE of the third dog clutch portion 30a, relative to the front end portions of the clutch rear teeth 30b2 and relative to the rear end position RE of the third dog clutch portion 30a. In addition, the control apparatus 10 calculates a moving speed of the sleeve 36 by the calculation portion depending on moving distances among plural detection positions during a predetermined period of time so as to control a relative rotation securing thrust load F2 which is added to the high teeth 36a1 based on the value of the moving speed that is calculated. The thrust load values F1 to F4 are controllable on the basis of data detected by the sleeve rotation number detection sensor 39 and the clutch ring rotation number detection sensor 49.

The axial driving device 40 reciprocates the sleeve 36 along the axial direction. In a case where the sleeve 36 is pressed against the third clutch ring 30 or the fourth clutch ring 32 and when a reaction force is applied from the third clutch ring 30 or the fourth clutch ring 32, the axial driving device 40 is configured to allow the sleeve 36 to move by the reaction force.

The axial driving device 40 is configured to include the fork 40a, a fork shaft 40b and a drive device 40c. A distal end portion of the fork 40a is formed to match an outer circumferential configuration of the outer circumferential groove 36b of the sleeve 36. A base end portion of the fork 40a is fixed to the fork shaft 40b. The fork shaft 40b is supported at the housing 22 to be slidable along the axial direction. That is, one end (left end) of the fork shaft 40b is supported at the first wall 22b via a bearing 22b3 and the other end side (right end) of the fork shaft 40b is fixed at a bracket 40d. The bracket 40d is slidable by a guide member (rotation lock) 40e which protrudes in the axial direction from the second wall 22c and is fixed to a nut member 40f so as not to be rotatable relative thereto. The nut member 40f is threadedly engaged with a driving shaft 40h including the drive device 40c in a manner that the nut member 40f may advance or retreat. The driving shaft 40h is supported at the second wall 22c via a bearing 22c3.

The drive device 40c is a linear drive apparatus of which drive source is the linear actuator 40i. The linear actuator 40i includes a linear actuator of a ball screw type, for example. The ball screw type linear actuator includes, for example, a housing, a rotor (not illustrated), the driving shaft 40h (ball screw shaft) and the nut member 40f. The housing formed in a cylindrical shape includes plural coils which are arranged in an inner circumferential direction and which serve as a stator (not illustrated). The rotor is arranged to be rotatable relative to the stator while including plural north pole magnets and south pole magnets. The north pole magnets and the south pole magnets face the stator with a magnetic gap relative to the stator, and are arranged at an outer circumference to alternate with each other. The driving shaft 40h rotates about a rotational axis of the stator integrally with the rotor. The nut member 40f is formed by a ball nut which threadedly engages with the driving shaft 40h. The driving shaft 40h is screwed into the nut member 40f to be rotatable relative to the nut member 40f via plural balls (not illustrated). An electric power supply to each of the coils of the stator is controlled so that the driving shaft 40h rotates in the forward direction and the backward direction arbitrarily, thereby reciprocating the nut member 40f and the fork shaft 40b. The nut member 40f and the fork shaft 40b are thus positioned and retained at arbitrary positions. In addition, because the ball screw shaft is formed to include a long lead, the axial driving device 40 is configured to allow the sleeve 36 to move by the reaction force which is applied from the third clutch ring 30 or the fourth clutch ring 32 in a case such a reaction force is applied.

The shift detent mechanism 58 is provided at the fork shaft 40b in the vicinity of the first wall 22b. The shift detent mechanism 58 includes a lock member 62 that is biased in a direction orthogonal to the axis of the fork shaft 40b by a biasing member (coil spring) not illustrated. It is configured that a sliding of the fork shaft 40b in the axial direction may be positioned at any position by the lock member 62 that is fitted by a spring force to one of position recess portions (triangular grooves) 60 which are provided at the fork shaft 40b along the axis. The position of the sleeve 36 relative to the clutch ring 30, 32 is positioned to a neutral position at which the spline (high teeth) 36a of the sleeve 36 is inhibited from making contact with the dog clutch portion 30a (clutch front teeth 30b1) of each of the third clutch ring 30 and the fourth clutch ring 32 and a meshing position at which the spline 36a of the sleeve 36 and the dog clutch portion 30a of the third clutch ring 30 or the fourth clutch ring 32, for example, mesh with each other.

The linear actuator of the ball screw type is used as the drive device in this embodiment, however, other drive device including a solenoid drive device or a hydraulic drive device may be used as long as the drive device allows the sleeve 36 to move by the reaction force which is applied from the third clutch ring 30 or the fourth clutch ring 32 in a case where the sleeve 36 is pushed against the third clutch ring 30 or the fourth clutch ring 32.

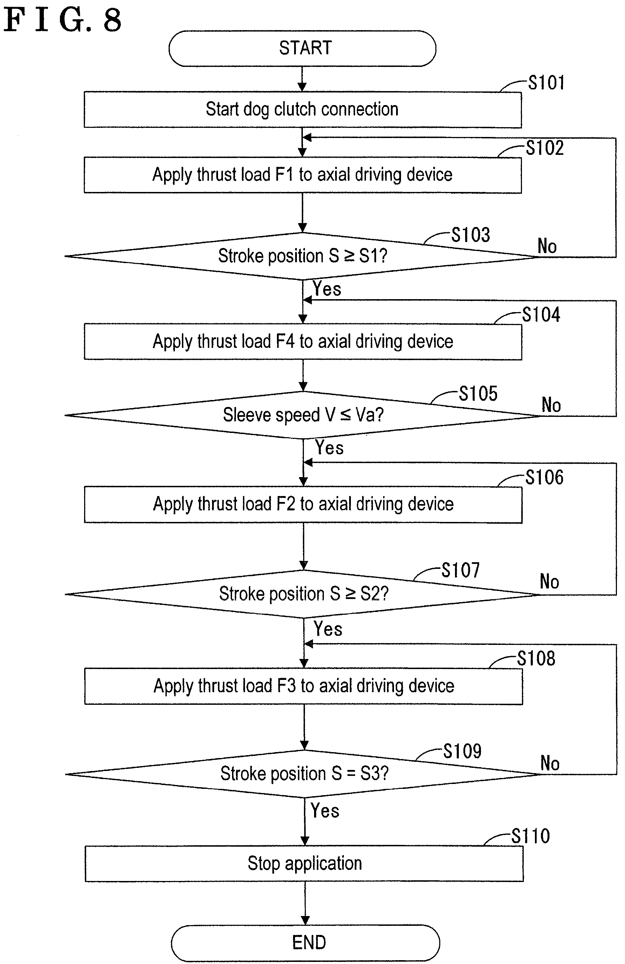

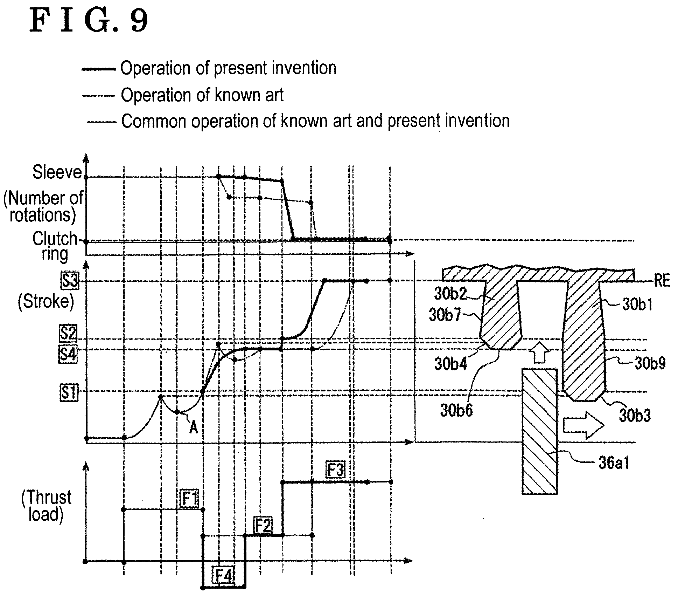

Next, an operation of the above-described dog clutch apparatus for the automated transmission is explained with reference to Figs. 8 and 9. Here, for example, at an up-shift operation, in a case where the sleeve 36 rotates at a high speed and with a small moment of inertia and the third clutch ring 30 (third input gear) rotates at a low speed and with a large moment of inertia, the speed of the sleeve 36 decreases. On the other hand, in a case where the sleeve 36 rotates at a low speed and with a small moment of inertia, and the third clutch ring 30 rotates at a high speed and with a large moment of inertia at a down-shift operation, the speed of the sleeve 36 increases. Hereunder, an operation for reducing the speed of the sleeve 36 in a case where the up-shift operation is performed is explained.

First, the sleeve 36 is positioned between the third clutch ring 30 and the fourth clutch ring 32 at a neutral position (intermediate position) where the spline (inner teeth) 36a of the sleeve 36 is inhibited from engaging with any of the dog clutch teeth 30b and the like of the third clutch ring 30 and the fourth clutch ring 32. In this case, the lock member 62 of the shift detent mechanism 58 is in a state fitting in a neutral position recess portion 60N.

As illustrated in Fig. 9, a boundary edge between the chamfered portion 30b3 of each of the clutch front teeth 30b1 of the third clutch ring 30 and the lateral surface 30b9 of each of the clutch front teeth 30b1 is a first stroke position S1. A boundary edge between the chamfered portion 30b4 of each of the clutch rear teeth 30b2 of the third clutch ring 30 and the lateral surface 30b7 of each of the clutch rear teeth 30b2 is a second stroke position S2. A rear end position of each of the clutch rear teeth 30b2 (rear end position RE of the third dog clutch portion 30a) is a third stroke position S3. The front end surface 30b6 of each of the clutch rear teeth is a fourth stroke position S4.

A range in which the end surface (front end surface 36a4) of the high tooth 36a1 of the sleeve 36 facing the third clutch ring 30 moves is classified into three moving ranges, that is, a moving range from the neutral position to the first stroke position S 1, a moving range from the first stroke position S1 to the second stroke position S2 and a moving range from the second stroke position S2 to the third stroke position S3. Further, a classification based on the moving speed of the sleeve 36 at a predetermined position from the first stroke position S1 to the fourth stroke position S4 is added to control the thrust load applied to the axial driving device 40 with four stages including F1 to F4 (refer to Fig. 9).

Upon receiving a signal of shift start, the control apparatus 10 applies a control current to the linear actuator 40i of the axial driving device 40. By the control current, the predetermined thrust load is applied (step S101 in Fig. 8, which is hereinafter referred to as S101). As the driving shaft 40h is elongated by the linear actuator 40i, the fork shaft 40b is moved and thus the sleeve 36 is slid by the fork 40a towards the third clutch ring 30. The sleeve 36 comes closer to the third clutch ring 30 while rotating relative to the third clutch ring 30 by a rotational difference between the sleeve 36 and the third clutch ring 30. At this time, the control apparatus 10 applies the thrust load F1, which is a constant load (S102).

Then, the control apparatus 10 detects the position of the high teeth 36a1 of the sleeve 36 by the stroke position sensor 38. In a case where the front end surfaces 36a4 of the high teeth 36a1 are bounced back without reaching the first stroke position S1 (point A in Fig. 9) even though the front end surfaces 36a4 come in contact with the front end surfaces 30b5 or the chamfered portions 30b3 of the clutch front teeth 30b1, the sleeve 36 is brought to approach the third clutch ring 30 again with the thrust load F1. The thrust load F1 corresponds to the thrust load obtained by a mutual phase of the sleeve 36 and the third clutch ring 30 resulting from the relative rotation therebetween, the mutual phase generating a speed at which each of the high teeth 36a1 is able to enter between the adjacent clutch front teeth 30b1 during a period of time during which the third dog clutch portion 30a and the sleeve 36 further rotate relative to each other and each of the high teeth 36a1 then reaches each of the next clutch front teeth 30b1 after each of the high teeth 36a1 passes each of the predetermined clutch front teeth 30b1 of the third dog clutch portion 30a without engaging therewith. Specifically, the thrust load F1 is appropriately calculated and controlled according to, for example, an outer diameter of each of the sleeve 36 and the third dog clutch portion 30a, a pitch of the teeth that mesh with each other, and a relative rotational speed of the sleeve 36 and the third dog clutch portion 30a.

Next, in a case where the sleeve 36 is brought closer to the third clutch ring 30 and then it is detected by the stroke position sensor 38 that the front end surfaces 36a4 of the high teeth 36a1 reach the first stroke position S1 (S103), the control apparatus 10 changes the thrust load applied by the axial driving device 40 to a stop thrust load F4 (S104). The stop thrust load F4 is the load that brakes the sleeve 36, which is moving in the forward direction, until immediately before the sleeve 36 is stopped. As illustrated in Fig. 9, a negative thrust load is applied to the sleeve 36 in many cases. In a case where it is determined that the sleeve 36 fails to reach the first stroke position S1 in step 103, the operation for detecting a stroke position S is repeated in a state where the thrust load F1 is applied to the sleeve 36.

Next, the control apparatus 10 calculates the moving speed of the high teeth 36a1 and determines whether or not the moving speed of the sleeve 36 (high teeth 36a1) which is decreasing by the braking of the stop thrust load F4 reaches a predetermined speed Va (S105). The predetermined speed Va is the speed (which may be zero) obtained immediately before the movement of the high teeth stops and is specified on the basis of a positional relation with the fourth stroke position S4. Before the high teeth 36a1 reach the fourth stroke position S4, the moving speed V of the sleeve 36 is reduced to the predetermined speed Va so as to inhibit the high teeth 36a1 from being bounced back by the front end surfaces 30b6 of the clutch rear teeth 30b2. In a case where it is determined that the moving speed does not reach the predetermined speed Va at step S105, the operation for calculating the moving speed V of the sleeve 36 is repeated in a state where the stop thrust load F4 is applied to the sleeve 36.

In a case where it is determined that the moving speed V of the sleeve 36 decreases to the predetermined speed Va, the control apparatus 100 applies the relative rotation securing thrust load F2 to the sleeve 36 (S106). The relative rotation securing thrust load F2 applied to the sleeve 36 is the thrust load by which the relative rotation between the sleeve 36 and the third dog clutch portion 30a may be secured against a friction force generated between the end surface (front end surface 36a4) of each of the high teeth 36a1 and the end surface (front end surface 30b6) of each of the clutch rear teeth 30b2 making contact with each other. Accordingly, a movement with a relative speed for a small difference in rotations (or co-rotation in a state where the high teeth 36a1 are in contact with the clutch rear teeth 30b2) is inhibited to realize a prompt shifting operation.

In a case where the sleeve 36 is moved towards the third clutch ring 30, it is possible that the high teeth 36a1 fit in any of tooth grooves 30b8 and tooth grooves 30b10 (refer to Fig. 5) of the dog clutch teeth 30b without being guided by the lateral surfaces 30b9 of the clutch front teeth 30b1. Nevertheless, because a distance between the clutch rear teeth 30b2 that are adjacent to each other is short, it is considered that the high teeth 36a1 (and the low teeth 36a2) are often bounced back by the clutch rear teeth 30b2 in a case where the high teeth 36a1 (and the low teeth 36a2) are about to fit in the tooth grooves 30b8 provided between the adjacent clutch rear teeth 30b2. Accordingly, in order to bring the high teeth 36a1 to engage with the dog clutch teeth 30b quickly, it is considered to be effective that the high teeth 36a1 are guided by the lateral surfaces 30b9 of the clutch front teeth 30b1 and are brought to fit in the tooth grooves 30b10 that are adjacent to the respective clutch front teeth 30b1.

Next, in a case where the stroke position sensor 38 detects that the front end surfaces 36a4 of the high teeth 36a1 reach the second stroke position S2 (alternatively, in a case where the number of rotations of the sleeve 36 by the sleeve rotation number detection sensor 39 greatly decreases) (S107), the control apparatus 10 determines that the high teeth 36a1 and the low teeth 36a2 start meshing with the clutch rear teeth 30b2. Thus, the control apparatus 10 changes the thrust load applied by the axial driving device 40 to the thrust load F3 (S108). The thrust load F3, which is applied at this time, corresponds to the thrust load that enables the inner teeth (spline) 36a of the sleeve 36 to enter the dog clutch teeth 30b against a frictional force generated between the high teeth 36a1 and the low teeth 36a2, and the clutch front teeth 30b1 and the clutch rear teeth 30b2 when the sleeve 36 is slid to the third clutch ring 30. Because of the aforementioned thrust load F3, the high teeth 36a1 are fitted in between the clutch front teeth 30b1 and the clutch rear teeth 30b2 while being guided by the lateral surfaces 30b9 of the clutch front teeth 30b1. In a case where it is determined that the stroke position S fails to reach the second stroke position S2 at step 107, the operation for detecting the stroke position S is repeated in a state where the relative rotation securing thrust load F2 is applied.

At this time, the low teeth 36a2 of the sleeve 36 mesh with all the dog clutch teeth 30b including the clutch rear teeth 30b2 of the third clutch ring 30 at the same time.

Further, in a case where the sleeve 36 is brought closer to the third clutch ring 30 and then it is detected by the stroke position sensor 38 that the front end surfaces 36a4 of the high teeth 36a1 reach the third stroke position (rear end position RE) S3 (S109), the control apparatus 10 determines that the sleeve 36 and the third clutch ring 30 completely mesh with each other and stops the application of the thrust load by the axial driving device 40 (S110).

In a case where the sleeve 36 rotates at a low speed and with a small moment of inertia and the third clutch ring 30 rotates at a high speed with a large moment of inertia, for example, at the down-shift operation, the rotational speed of the sleeve 36 increases. Thus, the relative rotation between the sleeve 36 and the third clutch ring 30 is in a manner opposite to the up-shift operation as explained above. Accordingly, each of the tooth grooves 30b10 of the clutch front teeth 30b1 in which the corresponding high tooth 36a1 fits is the tooth groove that is positioned at an opposite side relative to the clutch front tooth 30b1 (that is, the tooth groove at a right side adjacent to the clutch front tooth 30b1 in Fig. 9). The other operation is the same as that in the case where the rotational speed of the sleeve 36 is reduced.

As is clear from the above description, according to the dog clutch control apparatus for the automated transmission of this embodiment, the control apparatus 10 stops the high teeth 36a1 which are moving forward before the high teeth 36a1 make contact with the front end surfaces 30b6 of the clutch rear teeth 30b2. Thus, the high teeth 36a1 are inhibited from being bounced back by the front end surfaces 30b6 of the clutch rear teeth 30b2. A loss of the number of rotations of the sleeve upon bounce-back of the high teeth 36a1 by the clutch rear teeth 30b2 does not occur. As a result, the number of relative rotations (difference in rotations) between the sleeve 36 and the third clutch ring 30 is inhibited from decreasing and the high number of relative rotations is maintained so that the high teeth 36a1 make immediate contact with the lateral surfaces 30b9 of the clutch front teeth 30b1. Then, each of the high teeth 36a1 is able to fit in between the clutch rear tooth 30b2 and the clutch front tooth 30b1 while being guided by the lateral surface 30b9 of the clutch front tooth 30b1. As a result, the prompt shifting operation may be performed.

### (Second embodiment)

Hereinafter, a second embodiment where the automated transmission including the dog clutch control apparatus for the automated transmission according to the present invention is employed to the vehicle is explained with reference to drawings.

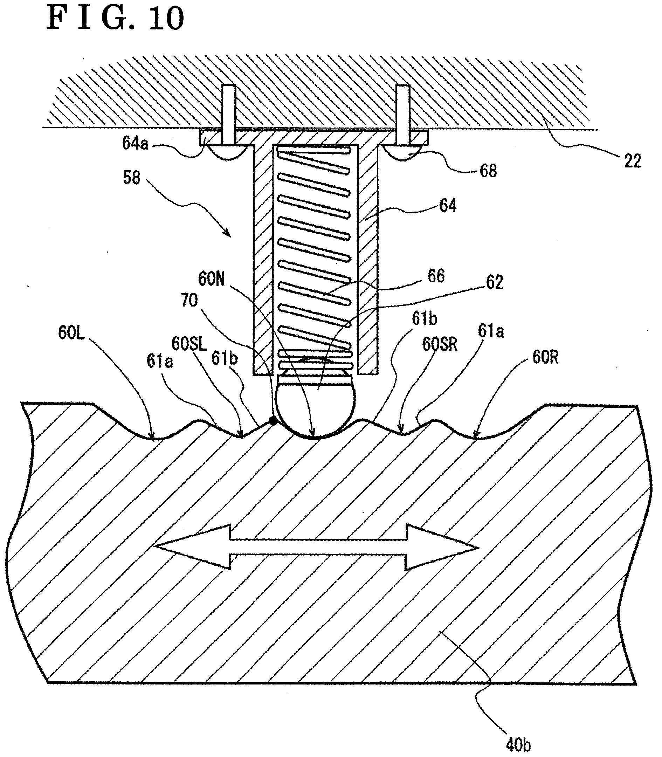

The shift detent mechanism 58 of the dog clutch control apparatus for the automated transmission according to the present embodiment differs from that of the first embodiment in including two stop position recess portions 60SR and 60SL for stopping the high teeth 36a1 of the sleeve 36 at positions before the front end surfaces 30b6 and the like of the clutch rear teeth 30b2 of the third and fourth clutch rings 30 and 32, in addition to the neutral position recess portion 60N for positioning the sleeve 36 at the neutral position and left and right meshing position recess portions 60R and 60L for positioning the sleeve 36 at the meshing positions. Detailed explanation is made with reference to Fig. 10 as below. The other construction of the second embodiment is the same as the first embodiment and therefore an explanation is omitted by designating the common reference numerals.

The shift detent mechanism 58 provided at the fork shaft 40b in the vicinity of the first wall 22b. As illustrated in Fig. 10, the shift detent mechanism 58 includes the position recess portions 60 (60N, 60L, 60R, 60SL, 60SR) provided at the outer periphery of the fork shaft 40b, the lock member (lock ball) 62 fitted in each of the poison recess portions 60, a guide member 64 guiding advance and retraction of the lock member 62, and a biasing member (coil spring) 66 biasing the lock member 62 in a direction approaching the fork shaft 40b.

As illustrated in Fig. 10, the plural position recess portions 60 are provided at the outer peripheral surface of the fork shaft 40b side by side in the axial direction. Each of the position recess portions 60 is formed, in a recess shape, by inclined surfaces 61a and 61b which are disposed adjacent to each other and facing each other. The meshing position recess portions 60R and 60L are provided at opposed sides. The neutral position recess portion 60N is provided at a center. The right stop position recess portion 60SR is provided between the right meshing position recess portion 60R and the neutral position recess portion 60N and the left stop position recess portion 60SL is provided between the left meshing position recess portion 60L and the neutral position recess portion 60N.

The lock member 62 is fitted in the neutral position recess portion 60N in a case where the sleeve 36 is stopped at the position, i.e., stop position, at which the sleeve 36 is stopped at the neutral position where the sleeve 36 is inhibited from making contact with the third clutch ring 30 and the fourth clutch ring 32. Positions where the lock member 62 is fitted in correspond to the stop positions at each of which the high teeth 36a1 are stopped. In a case where the lock member 62 is fitted in the right meshing position recess portion 60R at the right side in Fig. 10, the sleeve 36 is stopped at a third meshing position (corresponding to the rear end position RE) at which the sleeve 36 meshes with the dog clutch portion 30a of the third clutch ring 30. In a case where the lock member 62 is fitted in the left meshing position recess portion 60L at the left side in Fig. 10, the sleeve 36 is stopped at a fourth meshing position (not illustrated) at which the sleeve 36 meshes with the dog clutch portion (not illustrated) of the fourth clutch ring 32.

In a case where the lock member 62 is fitted in the right stop position recess portion 60SR provided between the neutral position recess portion 60N and the right meshing position recess portion 60R, each of the high teeth 36a1 of the sleeve 36 is stopped at the stop position before the front end surface 30b6 of each of the clutch rear teeth 30b2 of the third clutch ring 30. In a case where the lock member 62 is fitted in the left stop position recess portion 60SL provided between the neutral position recess portion 60N and the left meshing position recess portion 60L, each of the high teeth (not illustrated) of the sleeve 36 is stopped at the stop position before the end surface of each of the clutch rear teeth (not illustrated) of the fourth clutch ring 32.

The guide member 64 is formed in a cylindrical shape. A base portion of the guide member 64 is fixed via a bracket portion 64a to the housing 22 by means of plural screws 68, for example. The biasing member (coil spring) 66 is fitted to the guide member 64 in a pressed state. The lock member (lock ball) 62 made of steel is assembled on a distal end of the biasing member 66 so that the lock member 62 is relatively rotatable. The lock member 62 is biased by the biasing member 66 towards the fork shaft 40b from a direction orthogonal thereto. The lock member 62 is configured to be fitted in the position recess portion 60 of the fork shaft 40b by protruding from an end portion of the guide member 64 because of the biasing and to be retracted into the guide member 64 by an external force against the biasing force of the biasing member 66. When the fork shaft 40b slides in the direction of the axis SCL, the lock member 62 moves over an edge portion (edge (apex portion) 70 of the inclined surfaces 61a and 61b) of the position recess portion 60 in which the lock member 62 is fitted and moves to the adjacent position recess portion 60 to be fitted therein. At the position where the lock member 62 is fitted in, the lock member 62 restricts the movement of the fork shaft 40b in the direction of the axis SCL. The other construction of the second embodiment is the same as the first embodiment. Thus, an explanation is omitted by designating the common reference numerals.

Next, the operation of the aforementioned dog clutch apparatus for the automated transmission is explained with reference to Figs. 10 to 15. First, in the same way as the first embodiment, the sleeve 36 is positioned between the third clutch ring 30 and the fourth clutch ring 32 at the neutral (intermediate position) at which the spline (inner teeth) 36a of the sleeve 36 is inhibited from engaging with any of the dog clutch teeth 30b and the like of the third clutch ring 30 and the fourth clutch ring 32.

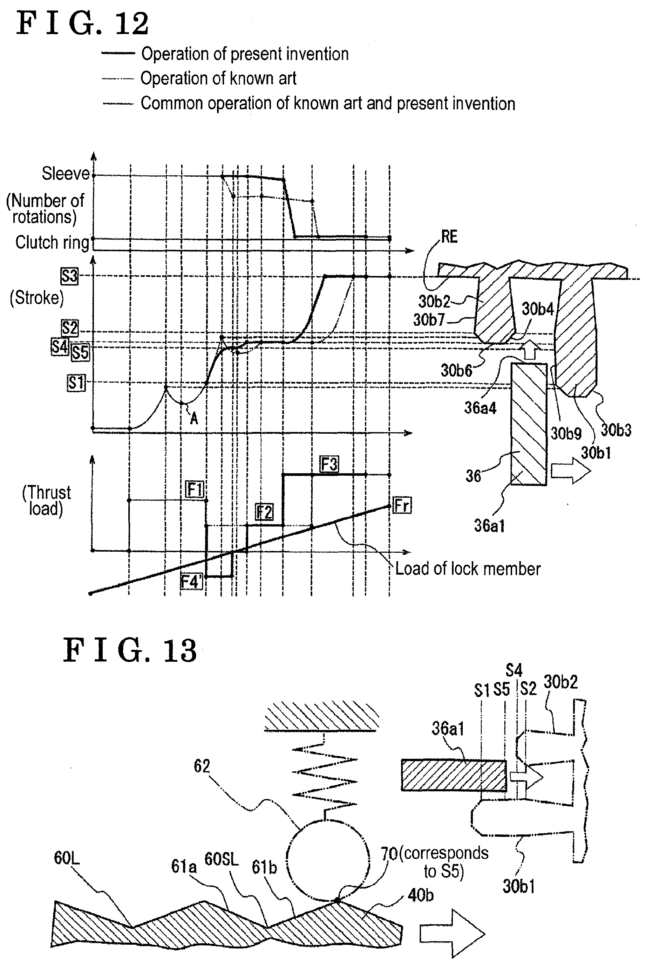

As illustrated in Fig. 12, a position before the front end surface 30b6 of each of the clutch rear teeth 30b2 is a fifth stroke position S5. The fifth stroke position S5 corresponds to the apex portion 70 of a protruding portion between the neutral position recess portion 60N and each of the meshing position recess portions 60L and 60R at the shift detent mechanism 58. In a case where the lock member 62 moves beyond the apex portion 70, the inclination of the inclined surface 61a, 61b with which the lock member 62 makes contact changes inversely. Thus, a direction of thrust force resulting from a pressing force applied to the inclined surface 61b by the biasing force of the biasing member 66 is switched to a direction in which the fork shaft 40b moves towards the third clutch ring 30 (the sleeve 36 is moved towards the third dog clutch portion 30a). In addition, the fourth stroke position S4 is provided corresponding to the left stop position recess portion 60SL. In a case where the lock member 62 is fitted in the left stop poison recess portion 60SL, the front end surface 36a4 of each of the high teeth 36a1 is specified to stop slightly before (for example, 0.5 mm before) the fourth stroke position S4. The other stroke positions S are the same as the first embodiment.

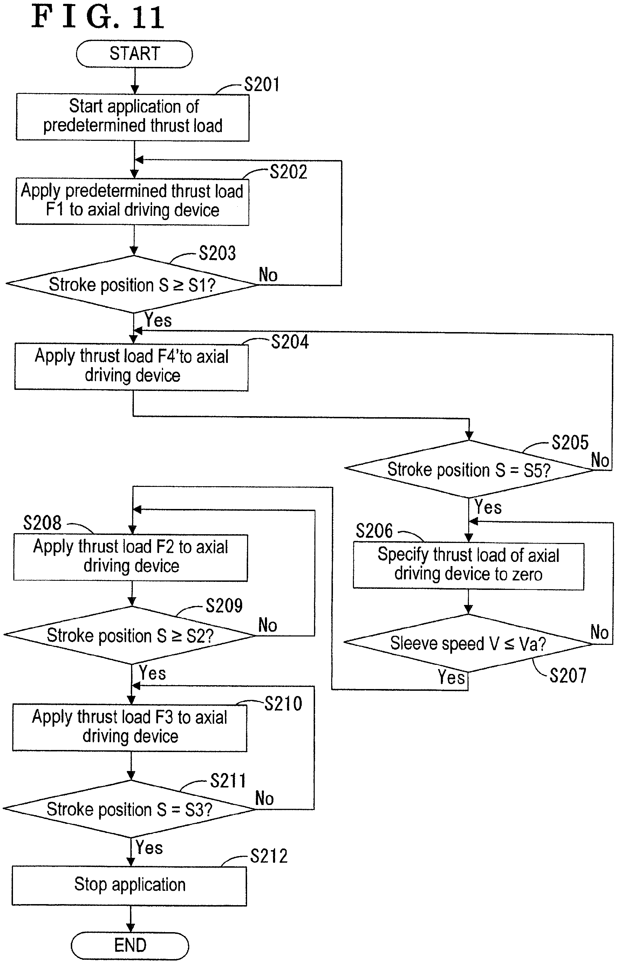

Upon receiving a signal of shift start, the control apparatus 10 applies a control current to the linear actuator 40i of the axial driving device 40. By the control current, the predetermined thrust load is applied (step S201 in Fig. 11, which is hereinafter referred to as S201). As the driving shaft 40h is elongated by the linear actuator 40i, the fork shaft 40b is moved and thus the sleeve 36 is slid by the fork 40a towards the third clutch ring 30. The sleeve 36 comes closer to the third clutch ring 30 while rotating relative to the third clutch ring 30 by a rotational difference between the sleeve 36 and the third clutch ring 30. At this time, the control apparatus 10 applies the thrust load F1, which is a constant load (S202).

Then, the control apparatus 10 detects the position of the high teeth 36a1 of the sleeve 36 by the stroke position sensor 38. In a case where the front end surfaces 36a4 of the high teeth 36a1 are bounced back without reaching the first stroke position S1 (point A in Fig. 12) even though the front end surfaces 36a4 come in contact with the front end surfaces 30b5 or the chamfered portions 30b3 of the clutch front teeth 30b1, the sleeve 36 is brought to approach the third clutch ring 30 again with the thrust load F1. The thrust load F1 corresponds to the thrust load obtained by the relative rotation between the sleeve 36 and the third clutch ring 30, the relative rotation generating a speed at which each of the high teeth 36a1 is able to enter a rotation adjustment range during a period of time during which the third dog clutch portion 30a and the sleeve 36 further rotate relative to each other and each of the high teeth 36a1 then reaches each of the next clutch front teeth 30b1 after each of the high teeth 36a1 passes each of the predetermined clutch front teeth 30b1 of the third dog clutch portion 30a without engaging therewith. Specifically, the thrust load F1 is appropriately calculated and controlled according to, for example, an outer diameter of each of the sleeve 36 and the third dog clutch portion 30a, a pitch of the teeth that mesh with each other, and a relative rotational speed of the sleeve 36 and the third dog clutch portion 30a.

Next, in a case where the sleeve 36 is brought closer to the third clutch ring 30 and then it is detected by the stroke position sensor 38 that the front end surfaces 36a4 of the high teeth 36a1 reach the first stroke position S1 (S203), the control apparatus 10 changes the thrust load applied by the axial driving device 40 to a stop thrust load F4' (S204). The stop thrust load F4' is the load that brakes the sleeve 36, which is moving in the forward direction, until immediately before the sleeve 36 is stopped.

Further, in a case where the sleeve 36 is brought closer to the third clutch ring 30 and then it is detected by the stroke position sensor 38 that the front end surfaces 36a4 of the high teeth 36a1 reach the fifth stroke position S5 (S205), the control apparatus 10 specifies the thrust load of the axial driving apparatus 40 to zero. In a case where the front end surfaces 36a4 of the high teeth 36a1 reach the fifth stroke position S5, the lock member 62 reaches the edge (apex portion) 70 of the inclined surface 61b as illustrated in Fig. 13.

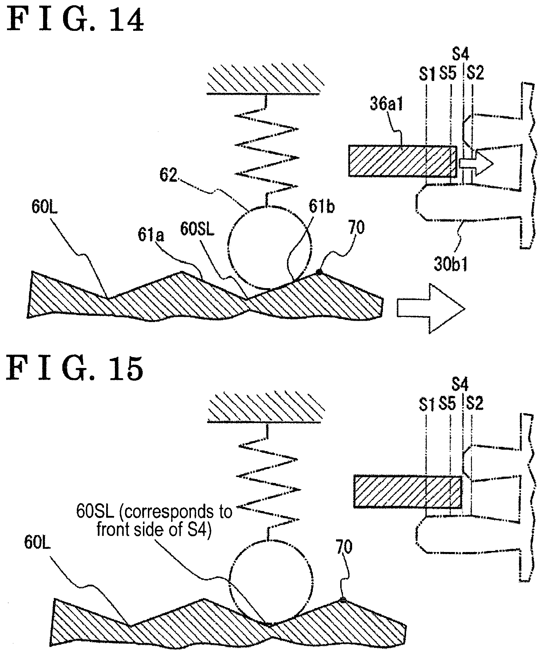

After the thrust load of the axial driving device 40 turns to zero, the sleeve 36 is moved forward only by a thrust force of a component of the axial direction which is generated at the time the lock member 62 presses the inclined surface 61b at the outer periphery of the fork shaft 40b (refer to Fig. 14). The high teeth 36a1 move by the biasing force until the lock member 62 reaches the left stop position recess portion 60SL. Then, it is determined whether or not the speed V of the sleeve 36 becomes equal to or smaller than the predetermined speed Va (for example, zero) (S207). In a case where the lock member 62 reaches the left stop position recess portion 60SL, the lock member is fitted to the recess portion. Therefore, the speed V in the axial direction SCL of the sleeve 36 turns to zero (refer to Fig. 15).

In a case where it is determined that the speed V of the sleeve 36 is equal to or smaller than the predetermined speed Va at step 207, the control apparatus 10 applies the relative rotation securing thrust load F2 to the sleeve 36 (S208).

Next, in a case where the stroke position sensor 38 detects that the front end surfaces 36a4 of the high teeth 36a1 reach the second stroke position S2 (alternatively, in a case where the number of rotations of the sleeve 36 by the sleeve rotation number detection sensor 39 greatly decreases) (S209), the control apparatus 10 determines that the high teeth 36a1 and the low teeth 36a2 start meshing with the clutch rear teeth 30b2. Thus, the control apparatus 10 changes the thrust load applied by the axial driving device 40 to the thrust load F3 (S210). Because of the aforementioned thrust load F3, each of the high teeth 36a1 is fitted in between the clutch front tooth 30b1 and the clutch rear tooth 30b2 while being guided by the lateral surface 30b9 of the clutch front tooth 30b1. At this time, the low teeth 36a2 of the sleeve 36 mesh with all the dog clutch teeth 30b including the clutch rear teeth 30b2 of the third clutch ring 30 at the same time.

Further, in a case where the sleeve 36 is brought closer to the third clutch ring 30 and then it is detected by the stroke position sensor 38 that the front end surfaces 36a4 of the high teeth 36a1 reach the third stroke position (rear end position) S3 (S211), the control apparatus 10 determines that the sleeve 36 and the third clutch ring 30 completely mesh with each other and stops the application of the thrust load by the axial driving device 40 (S212).

As is clear from the above description, according to the dog clutch control for the automated transmission of this embodiment, the reaction force (thrust force) applied to the inclined surface 61b by the biasing force of the lock member 62 causes the fork shaft 40b to move in the direction of the axis SCL so that the high teeth 36a1 of the sleeve 36 may be securely positioned before a position at which the high teeth 36a1 make contact with the front end surfaces 30b6 of the clutch rear teeth 30b2. Accordingly, the high teeth 36a1 are inhibited from being bounced back by the clutch rear teeth 30b2 to inhibit the decrease of difference in rotations between the sleeve 36 and the third clutch ring 30. A period of time during which the high teeth 36a1 that reach the clutch rear teeth 30b2 move to the lateral surfaces 30b9 of the clutch front teeth 30b1 may be reduced, which enables the prompt shifting operation.

The thrust load by the axial driving device 40 is stopped at the time the lock member 62 reaches the edge (apex portion) 70 of the inclined surface 61b so as to move forward the high teeth 36a1 of the sleeve 36 only by a small reaction force (smaller force than the thrust force by the linear actuator 40i of the axial driving device 40) applied to the inclined surface 61b by the lock member 62. The speed of the high teeth 36a1 of the sleeve 36 moving to the clutch rear teeth 30b2 is slight. Because of the slight speed of the high teeth 36a1 of the sleeve 36, the sleeve 36 is inhibited from being bounced back or an amount of bouncing is reduced even if the sleeve 36 is bounced back, thereby reducing the decrease of difference in rotations.

The high teeth that reach the clutch rear teeth 30b2 at a predetermined timing after the application of the stop thrust load F4' is applied with the relative rotation securing thrust load F2 that secures the relative rotation so that the high teeth promptly move to the lateral surfaces 30b9 of the clutch front teeth 30b1 without the co-rotation of the high teeth and the clutch rear teeth 30b2. The sleeve 36 and the third clutch ring 30 may promptly mesh with each other accordingly.

In the aforementioned embodiments, the decrease of the speed V of the sleeve 36 to the predetermined speed Va is the condition for applying the relative rotation securing thrust load F2. The condition, however, is not limited to the above. For example, the condition may be an arrival of the stroke position S at or in the vicinity of the end surfaces of the clutch rear teeth or an elapse of a predetermined time period measured by a timer after the application of the stop thrust load F4, F4'.

In the embodiments, the shift detent mechanism 58 includes the two stop position recess portions 60SR and 60SL for stopping the high teeth 36a1 of the sleeve 36 before the front end surfaces 30b6 and the like of the clutch rear teeth 30b2 of the third and fourth clutch rings 30 and 32, in addition to the neutral position recess portion 60N for positioning the sleeve 36 at the neutral position and the left and right meshing position recess portions 60R and 60L for positioning the sleeve 36 at the meshing positions. The configuration, however, is not limited to the above. For example, the neutral position recess portion 60N and the left and right meshing position recess portions 60R and 60L may not be provided and only the two stop position recess portions 60SR and 60SL may be provided at the outer periphery.

In the embodiments, the two clutch front teeth are provided to face each other on the circumference of the clutch ring. The configuration, however, is not limited to the above. For example, three or more than three of the front teeth may be disposed on the circumference of the clutch ring at even intervals.

In the embodiments, the dog clutch transmission mechanism is configured by the sleeve, the third clutch ring, the fourth clutch ring and the like. The configuration of the dog clutch transmission mechanism, however, is not limited thereto and may be configured by the sleeve, the first clutch ring (first output gear), the second clutch ring (second output gear) and the like.

In the embodiments, the rotary shaft is the input shaft 22 of the automated transmission rotataby connected to the output shaft of the engine 11 via the clutch 12. The rotary shaft, however, is not limited to the above and may be an output shaft of the automated transmission transmitting rotational torque from the automated transmission to the driving wheel-side. Specifically, in a construction of the automated transmission including the input shaft of the automated transmission connected to the output shaft of the engine via the clutch, the counter shaft arranged in parallel to the input shaft and rotatably connected via transmission gears, and the output shaft including a rotational axis in parallel to the counter shaft, the output shaft at which the plural idler gears are provided, the plural idler gears meshing with the plural transmission gears provided at the counter shaft, the aforementioned output shaft of the automated transmission may be the rotary shaft. In this case, the sleeve side includes a large inertia moment while the clutch ring side includes a small inertia moment (free state).

The rotary shaft rotataby connected to the input shaft of the automated transmission includes the case where the rotary shaft is directly connected to the input shaft as in the present embodiments, and the rotary shaft rotatably connected to the output shaft of the automated transmission includes a case where the rotary shaft is directly connected to the output shaft.

The present invention is not limited to the embodiments mentioned above and illustrated in the drawings and may be appropriately changed without departing from the subject matter thereof.

### INDUSTRIAL AVAILABILITY

Usable for a dog clutch apparatus for an automated transmission where a prompt shifting operation is required

### EXPLANATION OF REFERENCE NUMERALS

10: control apparatus, dog clutch control unit for automated transmission, 10a: calculation portion, 13: automated transmission, 22: housing, 24: input shaft, output shaft (input shaft), 30: clutch ring, dog clutch transmission mechanism (third clutch ring), 30a: dog clutch portion (third dog clutch portion), 30b1: clutch front teeth, 30b2: clutch rear teeth, 30b3: chamfered portion (chamfered portion of clutch front teeth), 30b6: end surface (front end surface of clutch rear teeth), 32: dog clutch transmission mechanism (fourth clutch ring), 34: clutch hub, dog clutch transmission mechanism, 36: sleeve, dog clutch transmission mechanism, 36a: spline (inner teeth), 36a1: high teeth, 36a2: low teeth, 36a5: tooth groove (tooth groove of spline), 38: stroke position sensor, dog clutch transmission mechanism, 40: axial driving device, dog clutch transmission mechanism, 40a: shift fork, 40b: fork shaft, 42 output shaft, 58: shift detent mechanism, 60: position recess portion, 60SL: left stop position recess portion, 60SR: right stop position recess portion, 61a, 61b: inclined surface, 62: lock member, 70: edge (apex portion) of inclined surface, FE: front end surface (front end surface of dog clutch portion), RE: rear end position, SCL: axis (rotational axis), t: predetermined amount

## Claims

1. A dog clutch control apparatus for an automated transmission, comprising:
a rotary shaft rotatably connected to one of an input shaft and an output shaft of an automated transmission and supported to be rotatable around an axis of the automated transmission;
a dog clutch transmission mechanism including:
a clutch ring rotatably supported at the rotary shaft and rotatably connected to the other of the input shaft and the output shaft;
a clutch hub fixed to the rotary shaft and arranged adjacent to the clutch ring;
a sleeve fitted to the clutch hub at a spline, the sleeve being inhibited from rotating relative to the clutch hub and movable in a direction of the axis;
an axial driving device moving the sleeve in an axial direction by a shift fork;
a dog clutch portion provided at a mating portion of the clutch ring, the mating portion protruding towards the sleeve, the dog clutch portion selectively meshing with the spline based on an axial movement of the sleeve; and
a stroke position sensor detecting a moving position of the sleeve in the axial direction;
the spline including a plurality of high teeth each of which includes a greater tooth depth than a tooth depth of the rest of the spline corresponding to a low tooth, the dog clutch portion including clutch front teeth which include an outer diameter greater than an inner diameter of the high teeth and smaller than an inner diameter of the low tooth, the clutch front teeth being arranged at positions corresponding to positions of the high teeth and extending from a front end surface of the dog clutch portion to a rear end position of the dog clutch portion, the dog clutch portion including clutch rear teeth configured to mesh with tooth grooves of the spline, each of the clutch rear teeth extending from a position retracted from the front end surface of the dog clutch portion by a predetermined amount to the rear end position of the dog clutch portion,
a control apparatus including a calculation portion calculating a moving speed of the sleeve based on a detection position by the stroke position sensor at a predetermined time and controlling an operation of the axial driving device based on the detection position by the stroke position sensor and the moving speed of the sleeve,
the control apparatus applying a stop thrust load to the high teeth for stopping a forward movement of the high teeth before the high teeth make contact with end surfaces of the clutch rear teeth after each of the high teeth passes through a chamfered position of each of the clutch front teeth, the chamfered position at which a chamfered portion inclined relative to a rotation direction of the clutch front teeth is provided.

2. The dog clutch control apparatus for the automated transmission according to claim 1, wherein the axial driving device further includes a shift detent mechanism including:
a fork shaft including an outer peripheral surface at which a stop position recess portion is formed in a recess shape by inclined surfaces facing each other and arranged adjacent to each other, the stop position recess portion positioning each of the high teeth before a position at which each of the high teeth makes contact with a front end surface of each of the clutch rear teeth, the fork shaft being supported at the housing to be slidable in the axial direction, the fork shaft to which the shift fork is fixed; and
a lock member provided at the housing and biased by a biasing member in a direction orthogonal to the fork shaft, the lock member being fitted in the position recess portion.

3. The dog clutch control apparatus for the automated transmission according to claim 2, wherein the fork shaft of the shift detent mechanism includes:
a neutral position recess portion arranged adjacent to the stop position recess portion at one side in the axial direction at the outer peripheral surface of the fork shaft, the neutral position recess portion in which the lock member is fitted at a neutral position at which the sleeve is inhibited from meshing with the dog clutch portion of the clutch ring, the neutral position recess portion positioning the sleeve; and
a meshing position recess portion arranged adjacent to the stop position recess portion at the other side in the axial direction at the outer peripheral surface of the fork shaft, the meshing position recess portion in which the lock member is fitted at a mating position at which the sleeve is meshed with the mating portion, the meshing position recess portion positioning the sleeve.

4. The dog clutch control apparatus for the automated transmission according to either claim 2 or 3, wherein the control apparatus stops the application of the stop thrust load at a time when the lock member reaches an edge of one of the inclined surfaces of the stop position recess portion.

5. The dog clutch control apparatus for the automated transmission according to any one of claims 1 through 4, wherein the control apparatus applies a relative rotation securing thrust load to the high teeth for securing a relative rotation between the high teeth and the clutch rear teeth against a friction force generated by a contact between end surfaces of the high teeth and the clutch rear teeth at a predetermined timing at which the high teeth reach the clutch rear teeth after the stop thrust load is applied.

6. The dog clutch control apparatus for the automated transmission according to claim 5, wherein the stop thrust load is a negative thrust load for braking the sleeve until immediately before the sleeve is stopped,
the control apparatus applying a fit-in allowable thrust load to the high teeth for causing each of the high teeth to fit in between the clutch front tooth and the clutch rear tooth against a friction force generated between the high and low teeth and the clutch front and rear teeth after the application of the relative rotation securing thrust load,
the fit-in allowable thrust load corresponding to a thrust load greater than the relative rotation securing thrust load.

7. The dog clutch control apparatus for the automated transmission according to claim 2, wherein the control apparatus applies a predetermined thrust load to the high teeth until each of the high teeth moves from a neutral position at which the high teeth are inhibited from meshing with the dog clutch portion to the chamfered position of each of the clutch front teeth during a time period during which the high tooth bounced back by the clutch front tooth rotates relative to the clutch front tooth and reaches the next clutch front tooth, the predetermined thrust load generating a speed at which the high tooth is configured to enter between the clutch front tooth by which the high tooth is bounced back and the next clutch front tooth,
the control apparatus applies the stop thrust load to the high teeth for stopping the forward movement of the high teeth until the lock member reaches an edge of one of the inclined surface of the stop position recess portion after the application of the predetermined thrust load,
the control apparatus applies a relative rotation securing thrust load to the high teeth for securing a relative rotation between the high teeth and the clutch rear teeth against a friction force generated by a contact between end surfaces of the high teeth and the clutch rear teeth in a case where the moving speed of the sleeve becomes equal to or smaller than a predetermined speed at which each of the high teeth is inhibited from being bounced back by the front end surface of each of the clutch rear teeth,
the control apparatus applies a fit-in allowable thrust load to the high teeth for causing each of the high teeth to fit in between the clutch front tooth and the clutch rear tooth against a friction force generated between the high and low teeth and the clutch front and rear teeth after the high tooth passes through a chamfered position of the clutch rear tooth, the chamfered position at which a chamfered portion inclined relative to a rotation direction of the clutch rear teeth is provided.
